# EUROPÄISCHE PATENTSCHRIFT

(11) **EP 1 977 150 B1**
(45) Veröffentlichungstag und Bekanntmachung des Hinweises auf die Patenterteilung: **27.08.2014**
(21) Anmeldenummer: 06829051.9
(22) Anmeldetag: 15.11.2006
(51) Int. Cl.: F16L 5/08, F16L 5/14, H02G 3/22

(54) **VORRICHTUNG ZUM FÜHREN VON KABELN ODER LEITUNGEN**
DEVICE FOR GUIDING CABLES OR WIRES
DISPOSITIF POUR FAIRE CHEMINER DES CABLES OU DES LIGNES

(30) Priorität: 25.11.2005 DE 102005056215
(43) Veröffentlichungstag der Anmeldung: 08.10.2008
(73) Patentinhaber: RITTAL GmbH & Co. KG, 35745 Herborn (DE)
(72) Erfinder: ELM, Oskar, 35713 Eschenburg (DE); MÜLLER, Matthias, 35683 Dillenburg (DE); BESSERER, Horst, 35745 Herborn (DE); BRENNER, Rolf, 35745 Herborn-Amdorf (DE)
(74) Vertreter: Tönhardt, Marion
(86) Internationale Anmeldenummer: PCT/EP2006/010937
(87) Internationale Veröffentlichungsnummer: WO 2007/059884

(56) Entgegenhaltungen:
- EP-A- 1 710 882
- DE-A1- 10 313 989
- DE-U1- 29 924 372

## Beschreibung

Die Erfindung betrifft eine Vorrichtung zum Führen von Kabeln oder Leitungen durch Wände, mit einer Halterung mit der zwei oder mehrere Kabelhalter verbunden sind, wobei die Halterung einen Montagebereich mit einer Durchführungsöffnung rahmenartig umgibt, und wobei die Kabelhalter im Bereich dieser Durchführungsöffnung angeordnet sind. Dabei ist der Montagebereich matrixartig mit mindestens zwei Montagezeilen und mindestens zwei Montagespalten ausgebildet ist, wobei die Montagezeilen und die Montagespalten jeweils ein konstantes Rastermaß vorgeben. Die Kabelhalter sind mit ihrer in Montagezeilenrichtung und Montagespaltenrichtung verlaufenden Breiten- und Längenerstreckung so dimensioniert, dass das Breiten- und das Längenmaß einem ganzzahligen Vielfachen des Rastermaßes entspricht. Eine derartige Vorrichtung ist in der DE 103 13 989 A1 beschrieben.

Eine weitere Vorrichtung ist aus der DE 92 11 740 U1 bekannt. Dabei ist eine rahmenförmige Halterung verwendet, die die Durchführungsöffnung bildet. Die Halterung weist einen umlaufenden Steg auf, der die Durchführungsöffnung umgibt. Auf diesen Steg können Kabelhalter, bestehend aus einem elastischen Gummimaterial aufgesetzt werden. Die Kabelhalter decken dabei einen Teilbereich der Durchführungsöffnung ab. In den verbleibenden Teilbereich wird ein Spannelement eingesetzt mit dem die einzelnen Kabefhalter quer zur Kabeldurchführungs-Richtung verspannt werden können. Bei dieser Vorrichtung kann der Teilbereich in dem das Spannelement eingesetzt ist nicht zur Kabelführung genutzt werden.

Das Spannelement muss von der Vorder- und der Rückseite der Vorrichtung her zugänglich sein, um es zu spannen. Im Einbauzustand muss daher die Wand an die die Vorrichtung angebaut ist rückseitig zugänglich gehalten werden. Darüber hinaus sind zwei Personen bei der Montage erforderlich. Eine, die das Spannelemente an der Vorderseite spannt und eine zweite, die hinter der Wand steht und das Spannelement kontert.

Darüber hinaus ist die puzzelartige Vorgehensweise zur Bestückung der Halterung nicht einfache, denn es muss darauf geachtet werden, dass die unterschiedlich großen Kabelhalter den Bereich der Durchführungsöffnung bis auf den Spannelementebereich lückefrei abdecken. Mitunter kann es bei gelöstem Spannelement vorkommen, dass die Kabelhalter unkontrolliert aus der Halterung fallen, so dass die Montage nicht immer problemlos ist.

Die EP 1 710 882 A ist als älteres Dokument gemäß Artikel 54(3) und (4) EPÜ 1973 zu berücksichtigen. Auch hierin wird eine gattungsgemäße Vorrichtung beschrieben, bei der außerdem die Kabelhalter einen nicht verformbaren Kabelumfassungskörper aufweisen, der umlaufend von einer Dichtung umgeben ist und der an der Halterung gehalten ist, wobei die Dichtung an einer Dichtfläche der Halterung und den Dichtungen des einen oder der mehreren benachbarten Kabelhaltern angelegt ist.

Es ist Aufgabe der Erfindung, eine Vorrichtung der eingangs erwähnten Art zu schaffen, die eine einfache und übersichtliche Bestückung des Montageraumes mit Kabelhaltern ermöglicht.

Diese Aufgabe wird durch eine Vorrichtung, wie sie in Anspruch 1 definiert ist, gelöst. Vorteilhafte Ausgestaltungen sind Gegenstand der Unteransprüche.

Infolge der matrixartigen Untergliederung des Montagebereiches ist eine übersichtliche Verlegung der Kabel/Leitungen möglich. Dabei können die einzelnen Kabelhalter in den durch das Rastermaß vorgegebenen Feldern beliebig angeordnet werden.

Der Montagebereich lässt sich lückenlos mit Kabelhaltern oder Blindstücken einfach ausfüllen.

Gemäß einer bevorzugten Ausgestaltungsvariante der Erfindung kann es vorgesehen sein, dass die Anzahl der Montagespalten ≥ 2 ist und die Anzahl der Montagezeilen =2, oder dass die Anzahl der Montagespalten = 2 und die Anzahl der Montagezeilen ≥ 2 ist, und dass die Halterung einen die Durchführungsöffnungen zumindest bereichsweise umgebenden Stützabschnitt aufweist, auf dem die Kabelhalter mit einem Stützabschnitt aufgesetzt sind.

Eine hohe IP-Dichtigkeit lässt sich dann erreichen, wenn vorgesehen ist, dass die Kabelhalter ein einen nicht verformbaren Kabelumfassungskörper aufweisen, der umlaufend von einer Dichtung umgeben ist und der an der Halterung gehalten ist, und dass die Dichtung an einer Dichtfläche der Halterung und den Dichtungen des einen oder der mehreren benachbarten Kabelhaltern angelegt ist. Die stabilen Kabelumfassungskörper können sicher in der Halterung verankert werden. Die Dichtungen bilden definierte Dichtstellen.

Eine Erfindungsausgestaltung ist derart, dass wenigstens einer der Kabelhalter oder wenigstens zwei Gruppen von Kabelhaltern jeweils unabhängig von dem oder den übrigen Kabelhaltern mittels den Kabelhaltern zugeordneten Verbindungselementen mit der Halterung verbindbar sind.

Mit den individuell den Kabelhaltern zugeordneten Verbindungselementen kann der Anwender gezielt die gewünschten Kabelhalter einzeln lösen. Die übrigen Kabelhalter bleiben dabei fixiert.

Damit ist die Handhabung der Vorrichtung übersichtlich und die Montage/Demontage der Kabelhalter einfach möglich. Es kann beispielsweise jedem Kabelhalter ein oder mehrere Verriegelungselemente zugeordnet sein, oder es kann eine Gruppe von Kabelhaltern mit einem oder mehreren Verriegelungselement(en) fixiert sein.

Die Kabelhalter können somit stets von der Vorderseite der Wand her gelöst und fixiert werden, was insbesondere eine Ein-Personen-Montage ermöglicht. Zudem können damit die Einbauverhältnisse auf der Wandrückseite unabhängig von der Kabeldurchführung gestaltet werden.

Um die freie Durchführung von mit Steckern bestückten Kabeln durch die Dürchführungsöffnung nicht zu beschränken, kann es erfindungsgemäß vorgesehen sein, dass die Verbindungselemente außerhalb der Durchführungsöffnung angeordnet sind.

Eine sichere Abstützung und Zugentlastung der Kabelhalter ergibt sich auf einfache Weise dadurch, dass die Kabelhalter in Kabeldurchführungs-Richtung formschlüssig mit der Halterung verbunden und entgegen der Kabeldurchführungs-Richtung mittels des/der Verbindungselemente abgestützt sind.

Hierbei kann es insbesondere vorgesehen sein, dass die Kabelhalter an ihrer dem Stützabschnitt abgekehrten Seite mit einem Fixierstück des Verbindungselementes übergriffen sind.

Eine einfache werkzeuglose Verriegelung des Verbindungselementes lässt sich dadurch erreichen, dass das Verbindungselement in der Verriegelungsstellung mittels einer Rastverbindung an der Halterung festgelegt ist.

Eine exakte Positionierung der Kabelhalter lässt sich dann einfach erreichen und aufrecht erhalten, wenn vorgesehen ist, dass die Verbindungselemente und/oder die Halterung Positionsaufnahmen aufweisen, an denen die Kabelhalter quer zur Kabeldurchführungsrichtung gehalten sind.

Eine zuverlässige Abdichtung der Kabelhalter lässt sich dadurch erreichen, dass die Halterung und/oder die Verbindungselemente Klemmstücke aufweisen, die die Kabelhalter in der Montageposition quer zur Kabeldurchführungs-Richtung dichtend verspannen. Auf diese Weise ist eine funktionelle Trennung der Verriegelung und der Abdichtung mit den Verbindungselementen und den Klemmstücken erreicht.

Eine hohe IP-Dichtigkeit lässt sich dabei insbesondere dadurch erzielen, dass die Halterung die Klemmstücke trägt, dass die Klemmstücke quer zur Kabeldurchführungs-Richtung verstellbar sind, und dass die Verstellbewegung der Klemmstücke mittels der Verbindungselemente in der Montageposition blockiert ist.

Erfindungsgemäß weisen die Kabelhalter einen nicht verformbaren Kabelumfassungskörper auf, der umlaufend von einer Dichtung umgeben ist und der an der Halterung gehalten ist, und die Dichtung ist an einer umlaufenden Dichtfläche der Halterung und den Dichtungen des einen oder der mehreren benachbarten Kabelhalter angelegt. Der stabile Kabelumfassungskörper, der beispielsweise aus einem oder mehreren Kunststoffspritzgußteilen bestehen kann, lässt sich zuverlässig an der Halterung abstützen. Die Dichtung kann zur Erfüllung ihrer Funktion dann in ihrer Beschaffenheit und Gestaltung unabhängig von dem Kabelumfassungskörper gestaltet sein.

Eine denkbare Erfindungsalternative kann dergestalt sein, dass der Kabelhalter einen Kabelumfassungskörper aufweist, der mindestens eine Kabeldurchführung umgibt und der zwei oder mehrere gegeneinander verstellbare Teilkörper aufweist, mittels derer die Kabeldurchführung quer zur Kabelführungs-Richtung öffenbar ist, und dass der Kabelumfassungskörper unmittelbar an der Halterung festgelegt ist.

In die Kabeldurchführung des öffenbaren Kabelumfassungskörpers können damit vorkonfektionierte Kabel mit bereits daran befestigten Steckern eingelegt werden. Dadurch, dass der Kabelumfassungskörper direkt mit der Halterung verbunden wird, kann eine einfache, kompakte Bauweise mit wenigen Bauteilen verwirklicht werden. Die Erfindung wird im Folgenden anhand eines in den Zeichnungen dargestellten Ausführungsbeispieles näher erläutert. Es zeigen:
- Figur 1: eine Halterung zum Führen von Kabeln oder Leitungen durch eine Wand in Seitenansicht;
- Figur 2: die Halterung gemäß Figur 1 in Draufsicht;
- Figur 3: die Halterung gemäß dem in Figur 2 mit III-III gekennzeichneten Schnittverlauf;
- Figur 4: die Halterung gemäß Figur 1 bis 3 in isometrischer Darstellung;
- Figur 5: eine Abdeckung in isometrischer Darstellung;
- Figur 6: die Abdeckung gemäß Figur 5 entlang dem in Figur 7 mit VI-VI gekennzeichneten Schnittverlauf;
- Figur 7: die Abdeckung in Draufsicht;
- Figur 8: eine Vorrichtung mit der Halterung gemäß den Figuren 1 bis 4 und der Abdeckung gemäß den Figuren 5 bis 7 sowie mit einem Kabelhalter und einem Verbindungselement, entlang dem in Figur 9 mit VIII-VIII gekennzeichneten Schnittverlauf;
- Figur 9: die Vorrichtung gemäß Figur 8 in Draufsicht;
- Figur 10: die Vorrichtung gemäß Figur 9 entlang dem in Figur 9 mit X-X gekennzeichneten Schnittverlauf und
- Figuren 11 bis 15: ein Verbindungselement in verschiedenen Ansichten.

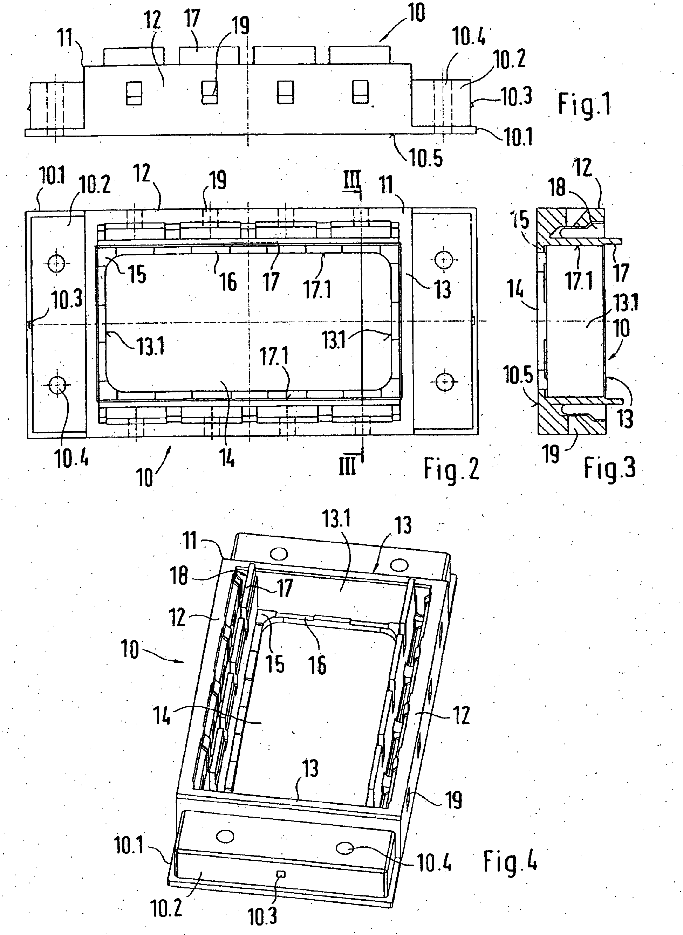

Die Figuren 1 bis 4 zeigen eine Halterung 10, die als Kunststoff-Spritzgußteil einteilig ausgeführt ist. Die Halterung 10 bildet mit in Längs- und Querrichtung verlaufenden Seitenteilen 12 und 13 einen Rahmen 11. Dieser umschließt eine Durchführungsöffnung 14. Dabei wird die Durchführungsöffnung 14 alleine von einem Stützabschnitt 15 begrenzt, der rechtwinklig von den Seitenteilen 12, 13 absteht. Im Bereich der Durchführungsöffnung 14 bildet die Halterung 10 einen Montagebereich der matrixartig aus zwei Montagezeilen und vier Montagespalten zusammengesetzt ist. Der Montagebereich kann mittels Kabelhaltern 30 ausgefüllt werden, wie dies später noch erläutert wird. Der Stützabschnitt 15 weist an seiner Vorderseite als Vertiefungen ausgebildete Positionieraufnahmen 16 auf.

Diese sind im Rastermaß zueinander beabstandet angeordnet, wobei das Rastermaß dem durch die Montagezeilen und Montagespalten vorgegebenen einheitlichen Rastermaß entspricht.

Wie die Figur 3 erkennen lässt sind im Anbindungsbereich des Stützabschnittes 15 an die Seitenteile 12 Klemmstücke 17 angeformt. Die Klemmstücke 17 verlaufen dabei durchgehend zwischen den Seitenteilen 13 und sind endseitig an diese angebunden.

Damit bilden die Klemmstücke 17 und die Seitenteile 13 eine umlaufende, der Durchführungsöffnung 14 zugekehrten Dichtfläche 17.1, 13.1. Die Klemmstücke 17 stehen mit Griffelementen an der Vorderseite der Halterung 10 vor. In dem der Durchführungsöffnung 14 abgekehrten Bereich ist rückseitig hinter den Klemmstücken 17 ein Freiraum 18 gebildet. In diesen können die Klemmstücke 17 um den im Übergangsbereich der Klemmstücke 17 zum Stützabschnitt 15 gebildeten Anbindungsabschnitt federelastisch verschwenkt werden.

Die Seitenteile 13 weisen zwei der Durchführungsöffnung 14 abgekehrte Ansätze 10.1 auf, die kastenartig ausgebildet sind. Sie sind von einem vorstehenden Rand 10.1 begrenzt und von jeweils zwei Schraubenaufnahmen 10:4 durchdrungen.

Seitlich sind die Ansätze 10.2 mit jeweils einem Rastelement 10.3 ausgerüstet. Die Halterung 10 weist, wie dies beispielsweise die Figur 3 erkennen lässt, eine Wandbefestigungsseite auf, die von einer ebenen Anlagefläche 10.5 gebildet wird. Mit dieser Anlagefläche 10.5 kann die Halterung 10 unter Zwischenlage einer Dichtung an eine Wand um einen Wanddurchbruch herum so angefügt werden, dass der Wanddurchbruch und die Durchführungsöffnung 14 in Flucht stehen.

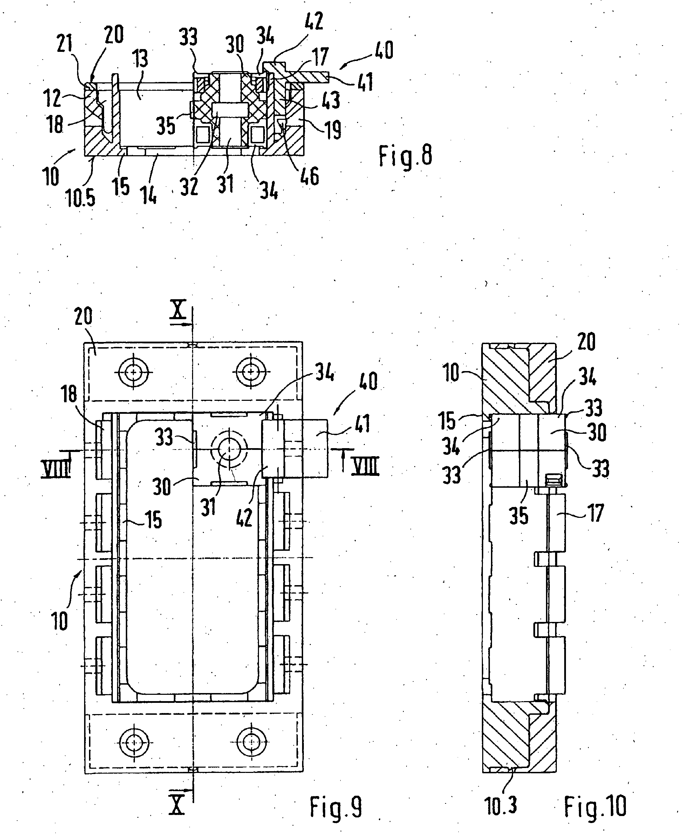

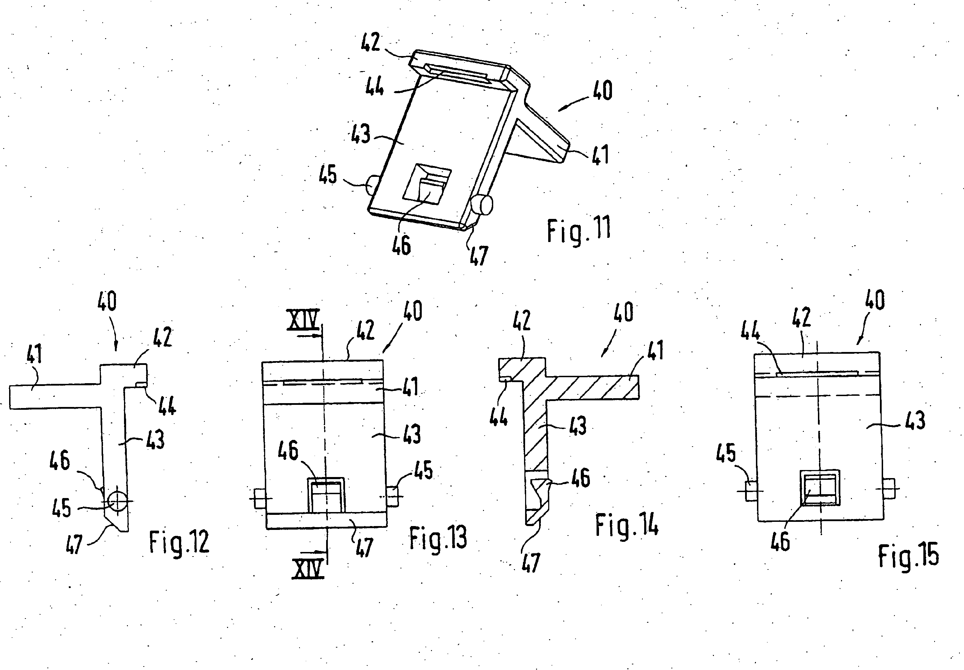

Wie die Figur 8 zeigt, können in den Freiraum 18 hinter den Klemmstücken 17 Verbindungselemente 40 eingesetzt werden. Die Ausgestaltung der Verbindungselemente 40 kann im Einzelnen den Figuren 11 bis 15 entnommen werden. Wie diese Zeichnungen zeigen, weist das Verbindungselement 40 einen Steg 43 und eine daran rechtwinklig angeformte Handhabe 41 auf. Weiterhin trägt der Steg 43 auf der der Handhabe 41 abgewandeten Seite ein Fixierstück 42. Dieses ist ebenfalls rechtwinklig zum Steg 43 angeordnet. Das Fixierstück 42 ist an seiner Unterseite mit einer Aussparung 44 versehen, die in ihrer Dimensionierung den Positionieraufnahmen 16 des Stützabschnittes 15 der Halterung 10 entspricht.

Der Steg 43 ist an seinem dem Fixierstück 42 abgewandten Ende mit einem Durchbruch ausgestattet, an dem er ein angeformtes Rastelement 46 trägt. Ebenfalls im Bereich des freien Endes des Steges 43 sind eine Formschräge 47 sowie zwei seitlich abstehende Anschläge 45 vorgesehen. Die Anschläge 45 sind als zylindrische Zapfen ausgebildet.

Wie die Figur 8 zeigt, können die Verbindungselemente 40 mit ihrem Steg 43 in den Freiraum 18 eingesetzt werden. In dem der Anlagefläche 10.5 zugewandten Bereich ist der Freiraum 18 von einer Schrägfläche begrenzt, die mit der Formschräge 47 des Verbindungselementes 40 zusammenarbeitet. Dementsprechend gleitet die Formschräge 47 auf der Schrägfläche auf, so dass der Steg 43 in der Montageposition an der Rückseite des Klemmstückes 17 anliegt. Gleichzeitig verrastet das Rastelement in einer zugeordneten Rastaufnahme 19, die als Durchbruch in das Seitenteil 12 der Halterung 10 eingebracht ist.

Die Verrastung kann einfach bewirkt werden, wobei die Verbindungselement 40 unter Zuhilfenahme der Handhabe 41 lediglich, in den Freiraum 18 eingedrückt werden muss.

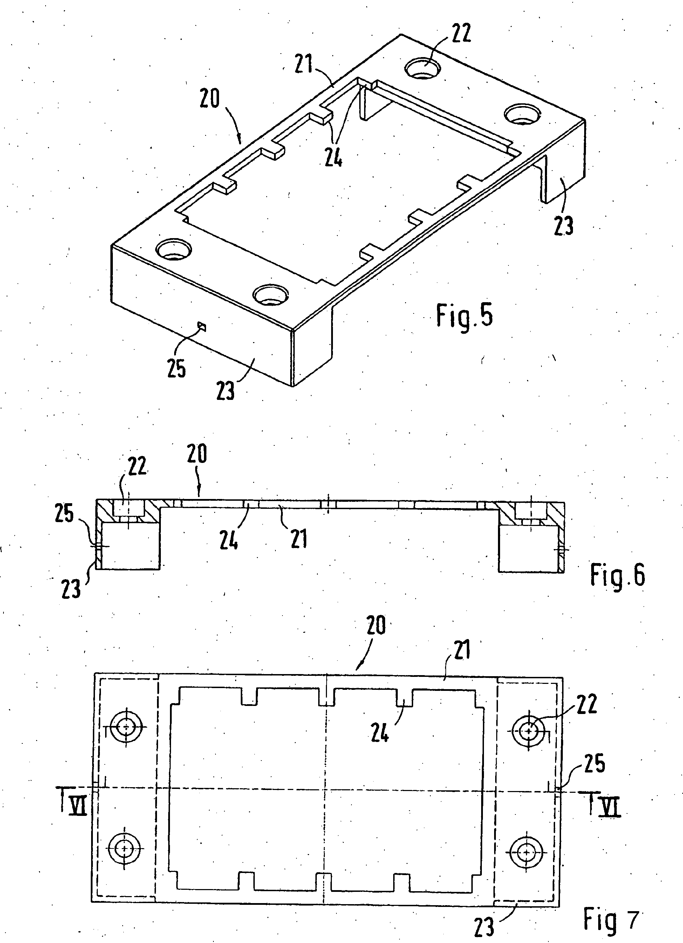

Wie die Figur 8 weiter erkennen lässt, ist mit der Halterung 10 eine Abdeckung 20 verbunden, die die Verbindungselemente 40 unverlierbar an der Halterung 10 festlegen. Die Ausgestaltung der Abdeckung 20 kann im Einzelnen den Figuren 5 bis 7 entnommen werden. Wie die Figur 5 zeigt, weist die Abdeckung 20 zwei zueinander parallel angeordnete Stege 21 auf, die mit kammerartigen Vorsprüngen 24 versehen sind. Die Stege 21 sind an ihren längsseitigen Enden mit kastenartigen Einfassungen 23 verbunden. Die Einfassungen 23 sind von Schraubaufnahmen 22 durchdrungen.

Die Abdeckung 20 kann auf die Halterung 10 aufgesetzt werden. Dabei umgreifen die Einfassungen 23 die Ansätze 10.2 der Halterung 10. Die Abdeckung 20 kann auf die Halterung 10 aufgeschoben werden, bis sie an dem Rand 10.1 anschlägt. In dieser Position rasten die Rastelemente 10.3 der Halterung 10 in Rastaufnahmen 25 der Abdeckung 20 ein, so dass die Abdeckung 20 unverlierbar gehalten ist. Dabei sind auch die Schraubaufnahmen 22 der Abdeckung 20 in Flucht zu den Schraubaufnahmen 10.4 der Halterung 10 angeordnet.

Die Stege 21 der Abdeckung 20 liegen, wie dies Figur 8 zeigt, auf den Seitenteilen 12 der Halterung 10 auf, wobei die Vorsprünge 24 den Freiraum 18 überdecken. Der Abstand zwischen den Vorsprüngen 24 ist auf die Beabstandung der Anschläge 45 des Verbindungselementes 40 angepasst. Das Verbindungselement 40 kann aus der in Figur 8 gezeigten Verriegelungsposition in eine Entriegelungsstellung gebracht werden. Dazu wird das Rastelement 46 mit einem geeigneten, durch die Rastaufnahme 19 hindurch gesteckten Werkzeug entsperrt und das Verbindungselement 40 in die der Anlagefläche 10.5 abgekehrte Richtung mit Hilfe der Handhabe 41 ausgezogen werden. Die Ausziehbewegung ist mittels der Anschläge 45 begrenzt, die an den Vorsprüngen 24 der Abdeckung 20 anschlagen.

Wie die Figur 8 weiter erkennen lässt, ist der Freiraum 18 in dem der Abdeckung 20 zugekehrten Bereich erweitert, so dass das Verbindungselemente 40 im ausgezogenen Zustand in Richtung der Erstreckungsrichtung der Handhabe 41 begrenzt nach außen geschwenkt werden kann. Dann steht das Fixierstück 42 außerhalb des Kabeldurchführungsbereiches, so dass Kabelhalter 30 bequem eingesetzt werden können.

Die Gestaltung der Kabelhalter 30 lassen die Figuren 8 bis 10 erkennen.

Sie bestehen aus zwei Gehäusehälften die miteinander verrastet werden können. Der Kabelhalter 30 umschließt eine Kabeldurchführung 31. Mittig in der Kabeldurchführung 31 ist eine Dichtelement-Aufnahme 32 vorgesehen. In diese ist ein Dichtelement eingelegt, die ein in die Kabeldurchführung 31 eingelegtes Kabel dichtend umschließt.

Weiterhin bildet der Kabelhalter 30 eine Zugentlastung, die das Kabel axial unverschiebbar fixiert. An ihren längsseitigen Enden bilden die Kabelhalter 30 um die Kabeldurchführung 31 herum Stützabschnitte 34 mit angeformten Ansätzen 33. Die Ansätze 33 sind in ihrer Dimensionierung auf die Gestaltung der Positionieraufnahmen 16 der Halterung 10 bzw. auf die Aussparungen 44 der Verbindungselemente 40 abgestimmt.

Die Kabelhalter 30 sind symmetrisch zur Mittelquerebene ausgebildet. In der Mittelquerebene umgibt ein umlaufendes Dichtelement 35 aus weichelastischem Material den Kabelhalter 30. Nachfolgend wird die Vorgehensweise zur Montage der Vorrichtung zur Durchführung von Kabeln beschrieben.

Zunächst werden die Gehäusehälften des Kabelhalters 30 um ein Kabel, das bereits mit Steckern vorkonfektioniert sein kann, gelegt und miteinander verrastet. Das Kabel ist dann abgedichtet festgelegt. Dann wird das Kabel gegebenenfalls mit dem Stecker durch die Durchführungsöffnung 14 hindurch geschoben: Die Durchführungsöffnung 14 ist ausreichend groß, dass auch geräumige Stecker eingeführt werden können. Anschließend wird der Kabelhaltern 30 an die gewünschte Position in der Montagematrix in die Halterung 10 gesetzt. Dabei sitzt der Kabelhalter 30 mit seinem Stützabschnitt 34 auf dem Stützabschnitt 15 der Halterung 10 auf. Die exakte Positionierung wird dabei mittels der Ansätze 33 des Kabelhalters 30 erreicht, die in die Positionieraufnahmen 16 des Stützabschnittes 15 eingreifen. Anschließend wird das zugeordnete Verbindungselement 40 mittels der Handhabe 41 in die Verriegelungspositionen gedrückt. Dabei greift der dem Fixierstück 42 des Verbindungselementes 40 zugekehrte Ansatz 33 in die Aussparung 44 ein. In der Montageposition ist der Kabelhalter 30 in Kabeldurchführungsrichtung formschlüssig an dem Fixierstück 42 und dem Stützabschnitt 15 festgelegt.

Neben dem in Figur 9 gezeigten Kabelhalter 30 sind weitere Kabelhalter 30 oder Blindstücke eingesetzt.

Die Kabelhalter 30 können dabei alle die gleiche Geometrie aufweisen oder es sind Kabelhalter 30 verwendet, die mehrere Einbauplätze in der Halterung 10 belegen. Dabei ist die Dimensionierung der Kabelhalter 30 in ihrer gemäß Figur 9 gezeigten, sich in der Bildebene erstreckenden, in der Längs- und Querrichtung bausatzartig gewählt. Dementsprechend entspricht die Längs- und/oder Quererstreckung immer einem ganzzahligen Vielfachen der Längs- und/oder Quererstreckung des in der Figur 9 gezeigten Kabelhalters 30.

Mit anderen Worten, die Dimensionierung der Kabelhalter 30 ist immer so gewählt, dass die Längs- und/oder Quererstreckung einem ganzzahligen Vielfachen des durch die Positionieraufnahmen 16 vorgegebenen Rastermaßes entspricht. Auf diese Weise kann der Kabeldurchführungsbereich vollständig mit Kabelhaltern 30 oder falls an bestimmten Stellen keine Kabeldurchführung gewünscht ist, mit Blindstücken ausgefüllt werden. Jedem Kabelhalter 30 (oder Blindstück) ist dabei wenigstens ein Verbindungselement 40 zugeordnet.

Die Kabelhalter 30 bzw. die Blindstücke sind im Kontaktbereich zur Halterung 10 mit der umlaufenden Dichtung 35 an der Dichtfläche 13.1 bzw. 17.1 der Halterung 10 abgedichtet. Die benachbarten Kabelhalter 30 (Blindstücke) dichten mit den aneinander liegenden Dichtungen 35.

Die Vorrichtung kann, wie bereits oben erwähnt, an eine Wand um einen Wanddurchbruch herum angebaut werden. Hierzu werden Schrauben durch die Schraubaufnahmen 22 der Abdeckung und der dazu fluchtenden Schraubaufnahmen 10.4 der Halterung 10 hindurchgeführt und mit der Wand verspannt.

## Patentansprüche

1. Vorrichtung zum Führen von Kabeln oder Leitungen durch Wände, mit einer Halterung (10) mit der zwei oder mehrere Kabelhalter (30) verbunden sind, wobei die Halterung (10) einen Montagebereich mit einer Durchführungsöffnung (14) rahmenartig umgibt, und wobei die Kabelhalter (30) im Bereich dieser Durchführungsöffnung (14) angeordnet sind, und
dass der Montagebereich matrixartig mit mindestens zwei Montagezeilen und mindestens zwei Montagespalten ausgebildet ist, wobei die Montagezeilen und die Montagespalten jeweils ein konstantes Rastermaß vorgeben, und dass die Kabelhalter (30) mit ihrer in Montagezeilenrichtung und Montagespaltenrichtung verlaufenden Breiten- und Längenerstreckung so dimensioniert sind, dass das Breiten- und das Längenmaß einem ganzzahligen Vielfachen des Rastermaßes entspricht,
**dadurch gekennzeichnet,**
**dass** die Kabelhalter (30) einen nicht verformbaren Kabelumfassungskörper aufweisen, der umlaufend von einer Dichtung (35) umgeben ist und der an der Halterung (10) gehalten ist, und
**dass** die jeweilige Dichtung (35) an einer Dichtfläche (13.1, 17.1) der Halterung (10) und den Dichtungen (35) des einen oder der mehreren benachbarten Kabelhaltern (30) angelegt ist, wobei die Halterung (10) eine Wandbefestigungsseite aufweist, mittels der sie mit einer Wand verbindbar ist, wobei
den Kabelhaltern (30) zugeordnete Verbindungselemente (40) über eine Verriegelung lösbar mit der Halterung (10) verbunden sind, und
das jeweilige Verbindungselement (40) von der der Wandbefestigungsseite abgewandten Seite her in die Verriegelungsposition verstellbar oder aus dieser lösbar ist.

2. Vorrichtung nach Anspruch 1,
**dadurch gekennzeichnet,**
**dass** die Anzahl der Montagespalten ≥2 ist und die Anzahl der Montagezeilen =2, oder
**dass** die Anzahl der Montagespalten = 2 und die Anzahl der Montagezeilen ≥2 ist, und
**dass** die Halterung (10) einen die Durchführungsöffnungen (14) zumindest bereichsweise umgebenden Stützabschnitt (34) aufweist, auf dem die Kabelhalter (30) mit einem Stützabschnitt (34) aufgesetzt sind.

3. Vorrichtung nach einem der Ansprüche 1 oder 2,
**dadurch gekennzeichnet,**
**dass** wenigstens einer der Kabelhalter (30) oder wenigstens zwei Gruppen von Kabelhaltern (30) jeweils unabhängig von dem oder den übrigen Kabelhaltern (30) mittels den Kabelhaltern (30) zugeordneten Verbindungselementen (40) mit der Halterung (10) verbindbar sind.

4. Vorrichtung nach einem der Ansprüche 1 bis 3,
**dadurch gekennzeichnet,**
**dass** die Verbindungselemente (40) außerhalb der Durchführungsöffnung angeordnet sind.

5. Vorrichtung nach einem der Ansprüche 1 bis 4,
**dadurch gekennzeichnet,**
**dass** die Kabelhaltern (30) in Kabeldurchführungs-Richtung formschlüssig mit der Halterung (10) verbunden und entgegen der Kabeldurchführungs-Richtung mittels des/der Verbindungselemente (40) abgestützt sind.

6. Vorrichtung nach einem der Ansprüche 1 bis 5,
**dadurch gekennzeichnet,**
**dass** die Kabelhalter (30) an ihrer dem Stützabschnitt (34) abgekehrten Seite mit einem Fixierstück (42) des Verbindungselementes (40) übergriffen sind.

7. Vorrichtung nach einem der Ansprüche 1 bis 6,
**dadurch gekennzeichnet,**
**dass** das Verbindungselement (40) in der Verriegelungsstellung mittels einer Rastverbindung an der Halterung (10) festgelegt ist.

8. Vorrichtung nach einem der Ansprüche 1 bis 7,
**dadurch gekennzeichnet,**
**dass** die Verbindungselemente (40) und/oder die Halterung (10) Positionsaufnahmen (16) aufweisen, an denen die Kabelhalter (30) quer zur Kabeldurchführungsrichtung gehalten sind.

9. Vorrichtung nach einem der Ansprüche 1 bis 8,
**dadurch gekennzeichnet,**
**dass** die Halterung (10) und/oder die Verbindungselemente (40) Klemmstücke (17) aufweisen, die die Kabelhalter (30) in der Montageposition quer zur Kabeldurchführungs-Richtung dichtend verspannen.

10. Vorrichtung nach Anspruch 9,
**dadurch gekennzeichnet,**
**dass** die Halterung (10) die Klemmstücke (17) trägt,
**dass** die Klemmstücke (17) quer zur Kabeldurchführungs-Richtung verstellbar sind, und
**dass** die Verstellbewegung der Klemmstücke (17) mittels der Verbindungselemente (40) in der Montageposition blockiert ist.

11. Vorrichtung nach einem der Ansprüche 1 bis 10,
**dadurch gekennzeichnet,**
**dass** der Kabelhalter (30) einen Kabelumfassungskörper aufweist, der mindestens eine Kabeldurchführung (31) umgibt und der zwei oder mehrere gegeneinander verstellbare Teilkörper aufweist, mittels derer die Kabelführung (31) quer zur Kabelführungs-Richtung öffenbar ist,
und **dass** der Kabelumfassungskörper unmittelbar an der Halterung (10) festgelegt ist.

## Claims

1. A device for guiding cables or wires through walls, having a holding device (10) with which two or more cable holders (30) are connected, wherein the holding device (10) surrounds a mounting area which contains a frame lead-through opening (14), and the cable holders (30) are arranged near the lead-through opening (14); and
the mounting area being a grid, having at least two mounting lines and at least two mounting columns, the mounting lines and the mounting columns each determining a constant grid dimension, and extensions in a width and a length of the cable holders (30) in their mounting line direction and mounting column direction being dimensioned so that width and length measurements correspond to a integer multiple of the grid dimensions,
**characterized in that**
the cable holders (30) have a non-deformable cable sheath surrounded by a seal (35) and maintained on the holding device (10), and
the respective seal (35) is placed against a sealing face (13.1, 17.1) of the holding device (10) and the seals (35) of each adjoining cable holder (30), wherein the holding device (10) comprises a wall fastening side for connecting with a wall, wherein connecting elements (40) associated with the cable holders (30) are releasably connected with the holding device (10) by a locking arrangement, and the relevant connecting element (40) is positionable into and out of a locking position from a direction of a side facing away from the wall fastening side.

2. The device in accordance with claim 1, **characterized in that** a first number of the mounting columns is ≧2 and a second number of the mounting lines =2, or the first number of the mounting columns =2 and the second number of the mounting lines ≧2, and at least in some areas the holding device (10) has a support section (34) which surrounds the lead-through openings (14) on which the cable holders (30) are placed with a support section (34).

3. The device in accordance with claim 1 or 2, **characterized in that** at least one of the cable holders (30), or at least two groups of the cable holders (30) are connectible with the holding device (10), respectively independently of each remaining cable holder (30) by connecting elements (40) assigned to the cable holders (30).

4. The device in accordance with any of claims 1 to 3, **characterized in that** the connecting elements (40) are arranged outside of the lead-through opening.

5. The device in accordance with any of claims 1 to 4, **characterized in that** in a cable lead-through direction the cables holders (30) are positively connected with the holding device (10) and are supported opposite a cable lead-through direction by the connecting elements (40).

6. The device in accordance with any of claims 1 to 5, **characterized in that** a fastening piece (42) of the connecting element (40) extends over the cable holders (30) on a side facing away from the support section (34).

7. The device in accordance with any of claims 1 to 6, **characterized in that** the connecting element (40) is fixed in place on the holding device (10) in a locked position by a snap-in connection.

8. The device in accordance with any of claims 1 to 7, **characterized in that** the connecting elements (40) and/or the holding device (10) has positioning receptacles (16) on which the cable holders (30) are maintained transversely with respect to the cable lead-through direction.

9. The device in accordance with any of claims 1 to 8, **characterized in that** the holding device (10) and/or the connecting elements (40) have clamping pieces (17) which sealingly clamp the cable holders (30) in a mounted position transversely with respect to the cable lead-through direction.

10. The device in accordance with claim 9, **characterized in that** the holding device (10) supports the clamping pieces (17), the clamping pieces (17) are adjustable transversely with respect to the cable lead-through direction, and an adjustment movement of the clamping pieces (17) is blocked in the mounted position by the connecting elements (40).

11. The device in accordance with any of claims 1 to 10, **characterized in that** the cable holder (30) has a cable sheath enclosing at least one cable lead-through (31) and has two or more partial bodies displaceable relative to each other, by which the cable lead-through (31) can be opened transversely with respect to the cable guidance direction, and the cable sheath is fixed in place directly on the holding device (10).

## Revendications

1. Dispositif permettant de guider des câbles ou lignes à travers les murs, comportant un support (10) auquel sont reliés deux ou plusieurs porte-câble (30), ledit support (10) entourant en forme de cadre une zone de montage avec une ouverture de passage (14), et les porte-câble (30) étant disposés dans la zone de ladite ouverture de passage (14), et la zone de montage est réalisée en forme de matrice avec au moins deux lignes de montage et au moins deux colonnes de montage, les lignes de montage et les colonnes de montage définissant respectivement une dimension constante de la trame, et les porte-câble (30) avec leur dimension en largeur et en longueur s'étendant dans le sens des lignes de montage et dans le sens des colonnes de montage sont dimensionnés de telle sorte que la valeur de la largeur et la valeur de la longueur correspondent à un multiple entier de la dimension de la trame,
**caractérisé**
**en ce que** les porte-câble (30) ont un corps d'enveloppe du câble non déformable, qui est entouré sur le pourtour par un joint d'étanchéité (35) et qui est maintenu sur le support (10), et
**en ce que** le joint d'étanchéité (35) respectif est en appui contre une surface étanche (13.1, 17.1) du support (10) et des joints d'étanchéité (35) d'un ou de plusieurs porte-câble (30) adjacents, le support (10) comportant une face de fixation au mur, par laquelle il peut être assemblé à un mur,
des éléments d'assemblage (40), associés aux porte-câble (30), étant reliés de manière amovible au support (10) par l'intermédiaire d'un verrouillage, et l'élément d'assemblage (40) respectif pouvant être déplacé depuis le côté opposé à la face de fixation au mur vers la position de verrouillage ou pouvant être détaché de celle-ci.

2. Dispositif selon la revendication 1, **caractérisé en ce que** le nombre de colonnes de montage est ≥2 et le nombre de lignes de montage est =2, ou **en ce que** le nombre de colonnes de montage est =2 et le nombre de lignes de montage est ≥2, et **en ce que** le support (10) comporte une partie d'appui (34), qui entoure au moins par zones les ouvertures de passage (14) et sur laquelle sont posés les porte-câble (30) avec une partie d'appui (34).

3. Dispositif selon la revendication 1 ou 2, **caractérisé en ce qu'**au moins un des porte-câble (30) ou au moins deux groupes de porte-câble (30) peuvent, indépendamment du ou des autres porte-câble (30), être reliés chacun au support (10) au moyen des éléments d'assemblage (40) associés aux porte-câble (30).

4. Dispositif selon l'une quelconque des revendications 1 à 3, **caractérisé en ce que** les éléments d'assemblage (40) sont disposés en dehors de l'ouverture de passage.

5. Dispositif selon l'une quelconque des revendications 1 à 4, **caractérisé en ce que** les porte-câble (30) sont assemblés au support (10) par conjugaison de forme dans le sens de passage du câble et sont supportés par le ou les éléments d'assemblage (40) dans le sens opposé au sens de passage du câble.

6. Dispositif selon l'une quelconque des revendications 1 à 5, **caractérisé en ce qu'**une partie de fixation (42) de l'élément d'assemblage (40) s'engage au-dessus des porte-câble (30) sur leur face opposée à la partie d'appui (34).

7. Dispositif selon l'une quelconque des revendications 1 à 6, **caractérisé en ce que** l'élément d'assemblage (40) est fixé sur le support (10) dans la position de verrouillage au moyen d'un assemblage par enclenchement.

8. Dispositif selon l'une quelconque des revendications 1 à 7, **caractérisé en ce que** les éléments d'assemblage (40) et/ou le support (10) comportent des logements de positionnement (16), au niveau desquels les porte-câble (30) sont maintenus transversalement au sens de passage du câble.

9. Dispositif selon l'une quelconque des revendications 1 à 8, **caractérisé en ce que** le support (10) et/ou les éléments d'assemblage (40) comportent des pièces de serrage (17), qui bloquent hermétiquement les porte-câble (30) dans la position de montage transversalement au sens de passage du câble.

10. Dispositif selon la revendication 9, **caractérisé en ce que** le support (10) porte les pièces de serrage (17), **en ce que** lesdites pièces de serrage (17) peuvent être déplacées transversalement au sens de passage du câble, et **en ce que** le mouvement de déplacement des pièces de serrage (17) est bloqué dans la position de montage au moyen des éléments d'assemblage (40).

11. Dispositif selon l'une quelconque des revendications 1 à 10, **caractérisé en ce que** le porte-câble (30) comporte un corps d'enveloppe du câble, qui entoure au moins un passe-câble (31) et qui comporte deux ou plusieurs corps partiels mobiles l'un contre l'autre, au moyen desquels le passe-câble (31) peut s'ouvrir transversalement au sens de passage du câble, et **en ce que** le corps d'enveloppe du câble est fixé directement sur le support (10).
